# EUROPÄISCHE PATENTSCHRIFT

(11) **EP 2 853 757 B1**
(45) Veröffentlichungstag und Bekanntmachung des Hinweises auf die Patenterteilung: **20.04.2022**
(21) Anmeldenummer: 14466020.6
(22) Anmeldetag: 29.09.2014
(51) Int. Cl.: F16C 11/06, B60Q 1/26

(54) **Kraftfahrzeugleuchte**
Motor vehicle lamp
Lampe pour véhicule automobile

(30) Priorität: 30.09.2013 CZ 20130757
(43) Veröffentlichungstag der Anmeldung: 01.04.2015
(73) Patentinhaber: Skoda Auto A.S., 293 60 Mladá Boleslav (CZ)
(72) Erfinder: Stránský, Jiri, 29501 Mnichovo Hradiste (CZ); Pavel, Huk, 29404 Dolní Bousov (CZ)

(56) Entgegenhaltungen:
- DE-A1- 19 944 287
- FR-A1- 2 871 120
- US-A1- 2013 050 861

## Beschreibung

### Technisches Gebiet

Die Erfindung betrifft eine in der Fahrzeugkarosserie befestigte Kraftfahrzeugleuchte, insbesondere eine mit axial gesicherten Kugelbolzen und geläufigen Befestigungselementen befestigte Leuchte.

### Bisheriger Stand der Technik

Derzeit werden zur Befestigung von Bauteilen eines Kraftfahrzeuges, insbesondere der Leuchte, die Kugelbolzen verwendet, deren ein Teil, in der Regel ein Gewinde aufweisend, in der Fahrzeugkarosserie befestigt ist und der zweite Kugelteil zur Befestigung der Fahrzeugleuchte dient. Die Aufnahme des Kugelbolzens für die Befestigung der Kraftfahrzeugleuchte ist z.B. in der Patentschrift DE 199 44 287 A1 beschrieben.

Die Fahrzeugleuchte weist eine Kugelhalterung auf, in der der Kugelzapfen aufgenommen wird. Dieser ist in der Halterung in zwei Achsen fixiert und zwar in der Achse Y sowie der Achse Z. Die genannte Fixierung entsteht durch den Kontakt der Kugelfläche des Zapfens mit den Wänden der Halterung. In der axialen Achse X ist der Kugelzapfen nur durch die Reibungskraft zwischen dem Kugelzapfen und der Kugelhalterung gehalten. Der Nachteil dieser derzeitigen Lösung besteht darin, dass die Kraft für die Fixierung des Kugelzapfens in der axialen Achse X des Kugelzapfens unzureichend ist. Da die Halterung an dem zu befestigenden Bauteil ausgebildet ist, der Bestandteil der Fahrzeugleuchte ist, kann durch eine Änderung der Geometrie der Halterung keine größere Reibungskraft zwischen dem Kugelzapfen und der Kugelhalterung erzielt werden.

In der Patentanmeldung US 2013 / 050 861 A1 ist eine Anordnung für die Verbindung eines Reflektors mit der Karosserie eines Fahrzeugs offenbart. Es ist eine Befestigungsanordnung zur Befestigung des Reflektors an einem Kugelbolzen beschrieben. Die Befestigungsanordnung wird durch eine Befestigungsplatte und einer Befestigungsbasis gebildet. Die Befestigungsplatte wird über die Befestigungsbasis geschoben und hat flexible Zungen. Zur Befestigung des Reflektors am Kugelbolzen, wird die Befestigungsbasis mit der Befestigungsplatte über den Kugelbolzen geschoben. Dabei werden die flexiblen Zungen nach außen gedrückt. Der Kugelbolzen wird gehalten, indem die Zungen am hinteren Ende des Kugelkopfes zurückfedern.

In der Patentanmeldung FR 2 871 120 A1 wird eine Gelenkanordnung für einen Frontscheinwerfer mit einem Richtmechanismus beschrieben. Die Anordnung weist Kugelzapfen auf und einen einstückigen Aufnahmekörper mit Rippen auf, bei der die Rippen derart beweglich ausgeführt sind, dass diese beim Einführen des Kugelzapfens in den Aufnahmekörper derart bewegt werden, dass der Kugelzapfen in den Aufnahmekörper eingeführt werden kann und in seiner Endstellung im Aufnahmekörper gehalten wird.

### Darstellung der Erfindung

Die Aufgabe wird durch eine Karosserie mit einer Formverprägung und einer daran angeordneten Kraftfahrzeugleuchte gemäß Anspruch 1 gelöst. In der Formverprägung sind mindestens ein Kugelbolzen mit Bolzenkopf und wenigstens ein Befestigungsloch angeordnet, wobei die Leuchte wenigstens eine Halterung mit halbzylindrischer Form aufweist, in der ein federndes Sicherungselement angeordnet ist.

Die Darstellung der Erfindung liegt darin, dass der kugelige Kugelbolzen zwischen einer an der Innenfläche der Halterung ausgebildeten kugelförmigen Einsenkung und einer an dem federnden Sicherungselement ausgebildeten kugelförmigen Verprägung angeordnet ist.

Das federnde Sicherungselement besteht aus einer Grundplatte mit Clips und einer federnden Sicherungslasche, auf der eine kugelförmige Verprägung ausgebildet ist.

Zur Aufnahme des federnden Sicherungselementes dienen die an der Halterung ausgebildeten Nuten, in denen die Grundplatte des federnden Sicherungselementes eingesteckt ist.

Um die Fixierung des federnden Sicherungselementes in den Nuten der Halterung sicherzustellen, weisen diese Rastöffnungen auf, in welche die an der Grundplatte des federnden Sicherungselementes angeordneten Clips einrasten.

Damit das Aufsetzen der Leuchte auf den Kopf des Kugelbolzens erleichtert wird, kann die Halterung am Umfang eine schräge Einlaufkante aufweisen.

### Übersicht der Figuren der Zeichnungen

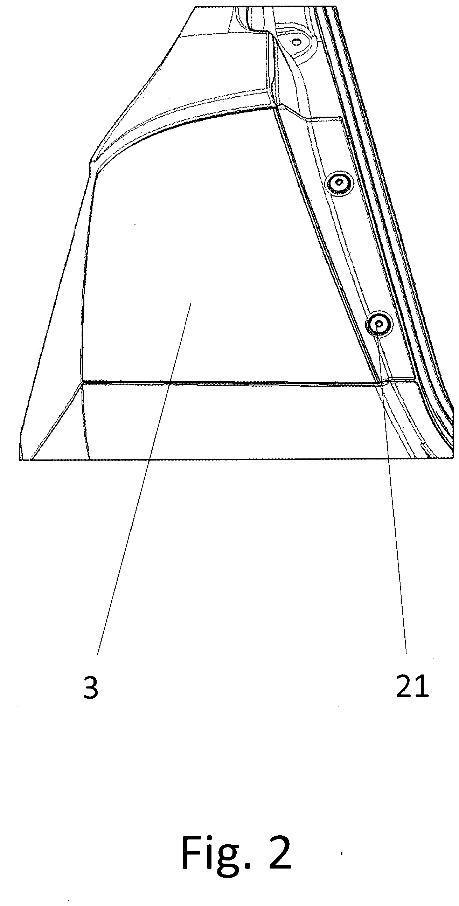

Die Erfindung wird anhand der Ausführungsbeispiele gemäß den beigefügten Zeichnungen näher erläutert, in denen zeigen die Fig. 1 die Ansicht des Abschnitts des Heckbereiches der Karosserie für die Befestigung der Leuchte, die Fig. 2 den Abschnitt des Heckbereiches der Karosserie mit eingebauter Leuchte, die Fig. 3 die in Karosserie eingebaute Leuchte in einem Schnitt, die Fig. 4 das Detail des Bolzens im Schnitt und die Fig. 5 eine perspektivische Ansicht der einzelnen Elemente der axialen Sicherung des Bolzens.

### Ausführungsbeispiel der Erfindung

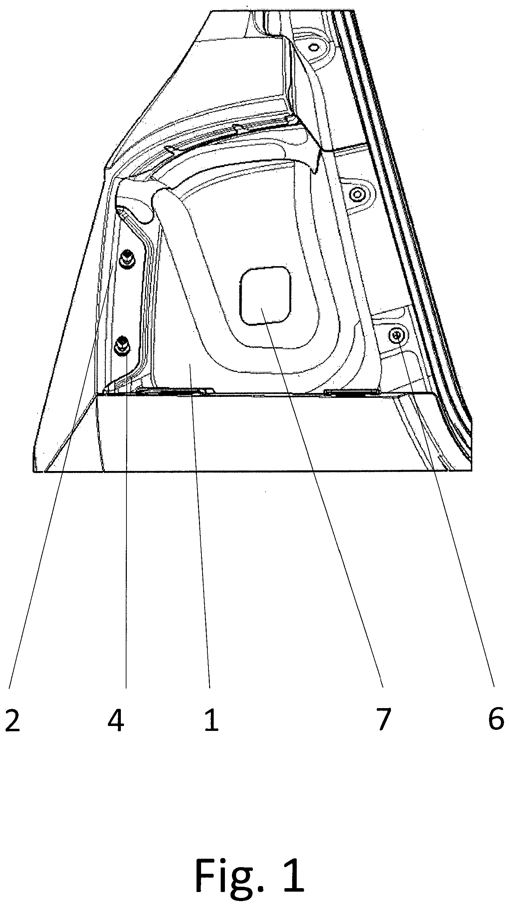

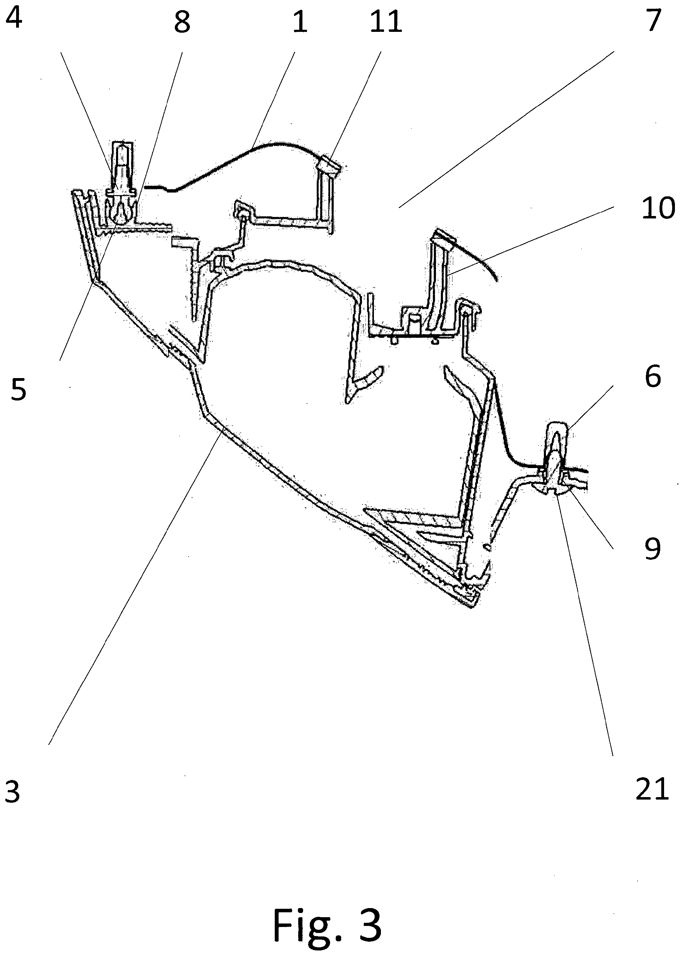

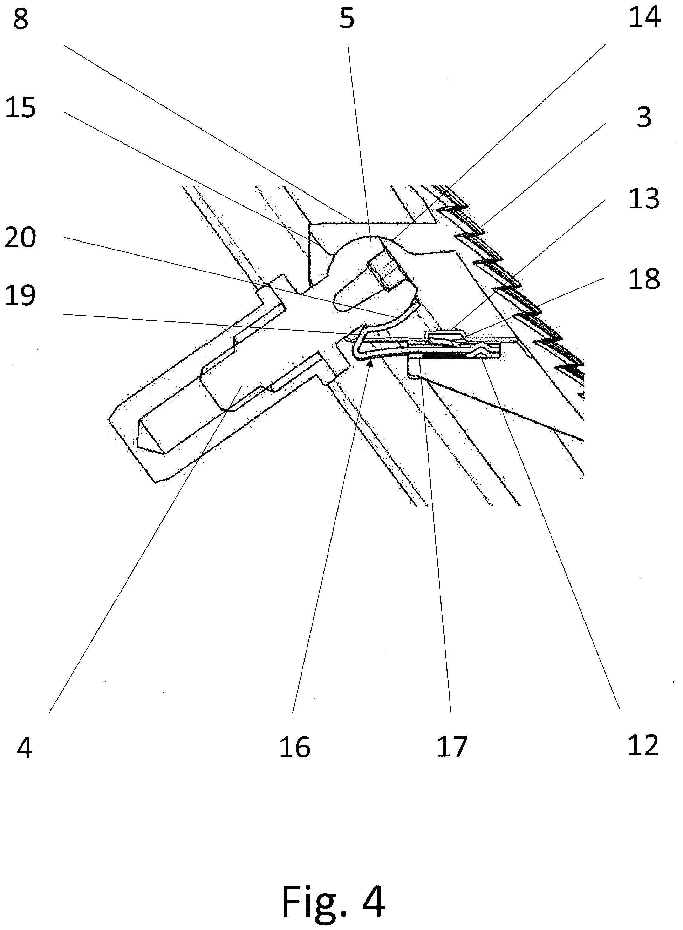

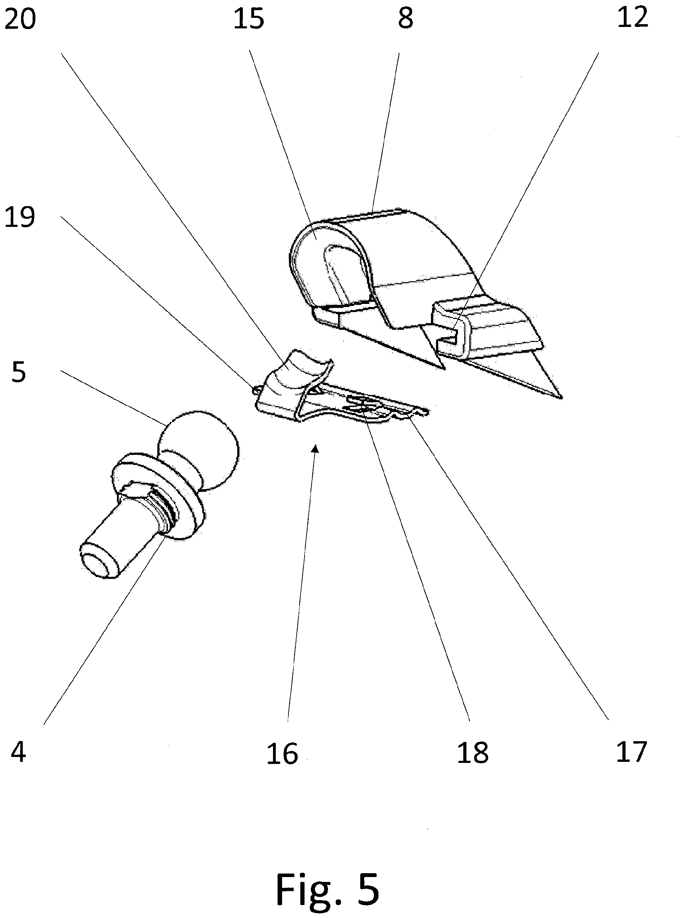

Die Fig. 1 zeigt den Heckbereich einer Karosserie 1 eines Kraftfahrzeuges mit einer Formverprägung 2, die für den Einbau einer Leuchte 3 angepasst ist. An der Außenseite der Formverprägung 2 sind Kugelbolzen 4 mit Bolzenkopf 5 angebracht, die Innenseite weist Befestigungslöcher 6 und in der Mitte eine Kabelstrangöffnung 7 für die Kabelstrangführung auf. Die Leuchte 3, wie der Fig. 3 zu entnehmen ist, weist an der Außenseite eine Halterungen 8 und an der Innenseite durchgehende Öffnungen 9 und in der Mitte eine Einfassung 10 auf, an der eine Dichtung 11 befestigt ist. Die Halterung 8, wie den Fig. 4 und 5 zu entnehmen ist, hat eine halbzylindrische Form, an deren jeder Seite eine Nut 12 ausgebildet ist, die eine Rastöffnung 13 aufweist. An der Innenfläche der Halterung 8 ist eine kugelförmige Einsenkung 14 ausgebildet, der umlaufende Abschnitt der Halterung 8 weist eine schräge Einlaufkante 15 auf. In den Nuten 12 ist ein federndes Sicherungselement 16 angeordnet. Dieses besteht aus einer Grundplatte 17 mit beiderseitig angeordneten Clips 18 und einer federnden Sicherungslasche 19, die mit der Grundplatte 17 verbunden ist. Die federnde Sicherungslasche 19 weist eine kugelförmige Verprägung 20 auf. In der eingesteckten Position rasten die Clips 18 in die Rastöffnungen 13 der Nuten 12 ein, wodurch das federnde Sicherungselement 16 gegen eine Bewegung fixiert ist.

Beim Einbau der Leuchte 3 in die Formverprägung 2 der Karosserie 1 wird die Leuchte 3 so angelegt, damit der Bolzenkopf 5 des Kugelbolzens 4 auf die schräge Einlaufkante 15 der Halterung 8 und auf die federnde Sicherungslasche 19 des federnden Sicherungselementes 16 aufsetzt. Durch leichten Druck auf die Leuchte 3 in der Richtung der Fahrzeuglängsachse wird die federnde Sicherungslasche 19 teilweise weggedrückt und beim nachfolgenden Druck rastet der Bolzenkopf 5 des Kugelbolzens 4 in die kugelförmige Einsenkung 14 der Halterung 8 und in die kugelförmige Verprägung 20 der federnden Sicherungslasche 19 ein. Gleichzeitig setzt die Dichtung 11 auf die Fläche der Karosserie 1 auf. Zuletzt wird die Leuchte 3 mit den Befestigungsschrauben 21 befestigt. Die angeführte axiale Sicherung des Kugelbozens 4 wird eine ordentliche Fixierung der Leuchte 3 sicherstellen, insbesondere angesichts der durch das Zusammendrücken der Dichtung 11 zwischen der Leuchte 3 und der Karosserie 1 des Fahrzeuges erzeugten Vorspannung.

Der Ausbau der Leuchte 3 erfolgt im umgekehrten Arbeitsablauf.

### Bezugszeichenliste

- 1.: Karosserie
- 2.: Formverprägung
- 3.: Leuchte
- 4.: Kugelbolzen
- 5.: Bolzenkopf
- 6.: Befestigungsloch
- 7.: Kabelstrangöffnung
- 8.: Halterung
- 9.: durchgehende Öffnung
- 10.: Einfassung
- 11.: Dichtung
- 12.: Nut
- 13.: Rastöffnung
- 14.: kugelförmige Einsenkung
- 15.: schräge Einlaufkante
- 16.: federndes Sicherungselement
- 17.: Grundplatte
- 18.: Clip
- 19.: federnde Sicherungslasche
- 20.: kugelförmige Verprägung
- 21.: Befestigungsschraube

## Patentansprüche

1. Karosserie (1) mit einer Formverprägung (2) und einer daran angeordneten Kraftfahrzeugleuchte (3), die in der Formverprägung (2) angeordnet ist, in der wenigstens ein Kugelbolzen (4) mit Bolzenkopf (5) und wenigstens ein Befestigungsloch (6) angeordnet sind, wobei die Kraftfahrzeugleuchte (3) wenigstens eine halbzylindrische Halterung (8) aufweist, in der ein federndes Sicherungselement (16) angeordnet ist, wobei
- der Bolzenkopf (5) des Kugelbolzens (4) zwischen einer an der Innenfläche der Halterung (8) ausgebildeten kugelförmigen Einsenkung (14) und einer an dem federnden Sicherungselement (16) ausgebildeten kugelförmigen Verprägung (20) angeordnet ist,
- das federnde Sicherungselement (16) aus einer Grundplatte (17) mit Clips (18) und einer federnden Sicherungslasche (19) besteht, an der eine kugelförmige Verprägung (20) ausgebildet ist,
- an der Halterung (8) Nuten (12) ausgebildet sind, in denen die Grundplatte (17) des federnden Sicherungselementes (16) angeordnet ist, und
- die Nuten (12) der Halterung (8) Rastöffnungen (13) aufweisen, in welche die an der Grundplatte (17) angeordneten Clips (18) einrasten.

2. Karosserie (1) nach Anspruch 1 wobei die Halterung (8) am Umfang eine schräge Einlaufkante (15) aufweist.

3. Verfahren zur Montage einer Kraftfahrzeugleuchte (3) an einer Karosserie (1) nach Anspruch 2, wobei die Kraftfahrzeugleuchte (3) eine an einer Einfassung (10) befestigte Dichtung (11) aufweist, durch Ausführen folgender Verfahrensschritte:
a. Anlegen der Kraftfahrzeugleuchte (3), damit der Bolzenkopf (5) des Kugelbolzens (4) auf die schräge Einlaufkante (15) der Halterung (8) und auf die federnde Sicherungslasche (19) des federnden Sicherungselements (16) aufsetzt,
b. Aufbringen eines Drucks auf die Kraftfahrzeugleuchte (3) in Richtung einer Fahrzeuglängsachse und damit teilweises Wegdrücken der federnden Sicherungslasche (19), bis
c. der Bolzenkopf (5) des Kugelbolzens (4) in die kugelförmige Einsenkung (14) der Halterung (8) und in die kugelförmige Verprägung (20) der federnden Sicherungslasche (19) einrastet, wobei zugleich die Dichtung (11) auf eine Fläche der Karosserie (1) aufsetzt,
d. Befestigen der Leuchte (3) mit Befestigungsschrauben (21).

## Claims

1. A body (1) with a form embossing (2) and a motor vehicle lamp (3) arranged thereon, which is arranged in the form embossing (2), in which at least one ball stud (4) with stud head (5) and at least one fastening hole (6) are arranged, wherein the motor vehicle lamp (3) has a least one semi-cylindrical mounting (8), in which a resilient securing element (16) is arranged,
wherein
- the stud head (5) of the ball stud (4) is arranged between a spherical depression (14) formed on the inner surface of the mounting (8) and a spherical embossing (20) formed on the resilient securing element (16),
- the resilient securing element (16) consists of a base plate (17) with clips (18) and a resilient securing tab (19), on which a spherical embossing (20) is formed,
- grooves (12) are formed on the mounting (8), in which the base plate (17) of the resilient securing element (16) is arranged, and
- the grooves (12) of the mounting (8) have latching openings (13), in which the clips (18) arranged on the base plate (17) snap.

2. The body (1) according to claim 1, wherein the mounting (8) has a sloping inlet edge (15) on the circumference.

3. A method for mounting a motor vehicle lamp (3) on a body (1) according to claim 2, wherein the motor vehicle lamp (3) has a seal (11) fastened to an enclosure (10), by performing the following method steps:
a. Install the motor vehicle lamp (3), so that the stud head (5) of the ball stud (4) is placed on the sloping inlet edge (15) of the mounting (8) and on the resilient securing tab (19) of the resilient securing element (16),
b. apply pressure to the motor vehicle lamp (3) in the direction of the vehicle longitudinal axis and thus partially push away the resilient securing tab (19), until
c. the stud head (5) of the ball stud (4) snaps into the spherical depression (14) of the mounting (8) and into the spherical embossing (20) of the resilient securing tab (19), wherein at the same time the seal (11) is placed on a surface of the body (1),
d. fasten the lamp (3) with fastening screws (21).

## Revendications

1. Carrosserie (1) avec un estampage de forme (2) et un phare de véhicule (3) disposé dessus, qui est disposé dans l'estampage de forme (2), dans lequel sont disposés au moins une tige à rotule (4) avec une tête de tige (5) et au moins un trou de fixation (6), dans lequel le phare de véhicule (3) comprend au moins un support semi-cylindrique (8) dans lequel est disposé un élément de fixation élastique (16), dans lequel
- la tête de tige (5) de la tige à rotule (4) est disposée entre un renfoncement sphérique (14) réalisé sur la surface interne du support (8) et un estampage sphérique (20) réalisé sur l'élément de fixation élastique (16),
- l'élément de fixation élastique (16) est constitué d'une plaque de base (17) avec des clips (18) et d'une patte de fixation élastique (19) sur laquelle est réalisé un estampage sphérique (20),
- sur le support (8), sont réalisées des rainures (12) dans lesquelles la plaque de base (17) de l'élément de fixation élastique (16) est disposée et
- les rainures (12) du support (8) comprennent des ouvertures d'encliquetage (13) dans lesquelles s'encliquettent les clips (18) disposés sur la plaque de base (17).

2. Carrosserie (1) selon la revendication 1, dans laquelle le support (8) comprend, sur sa périphérie, une arête d'entrée inclinée (15).

3. Procédé de montage d'un phare de véhicule (3) sur une carrosserie (1) selon la revendication 2, dans lequel le phare de véhicule (3) comprend un joint d'étanchéité (11) fixé à une bordure (10), par l'exécution des étapes suivantes :
a. pose du phare de véhicule (3), afin que la tête de tige (5) de la tige à rotule (4) repose sur l'arête d'entrée inclinée (15) du support (8) et sur la patte de fixation élastique (19) de l'élément de fixation élastique (16),
b. application d'une pression sur le phare de véhicule (3) dans la direction d'un axe longitudinal de véhicule et donc éloignement partiel par pression de la patte de fixation élastique (19) jusqu'à ce que
c. la tête de tige (5) de la tige à rotule (4) s'encliquette dans le renfoncement sphérique (14) du support (8) et dans l'estampage sphérique (20) de la patte de fixation élastique (19), dans lequel le joint d'étanchéité (11) repose en même temps sur une surface de la carrosserie (1),
d. fixation du phare (3) avec des vis de fixation (21).
